(19) Europäisches Patentamt
European Patent Office
Office européen des brevets

(11) **EP 2 023 346 A1**

(12) **EUROPEAN PATENT APPLICATION**
published in accordance with Art. 153(4) EPC

(43) Date of publication:
**11.02.2009 Bulletin 2009/07**

(21) Application number: **07744708.4**

(22) Date of filing: **05.06.2007**

(51) Int Cl.:
*G11B 7/254* (2006.01)   *C08F 290/06* (2006.01)
*G11B 7/24* (2006.01)   *G11B 7/257* (2006.01)

(86) International application number:
**PCT/JP2007/061356**

(87) International publication number:
**WO 2007/142229 (13.12.2007 Gazette 2007/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **07.06.2006 JP 2006158251**

(71) Applicant: **Nipponkayaku Kabushikikaisha Tokyo 102-8172 (JP)**

(72) Inventors:
• **TOKUDA, Kiyohisa Tokyo 1158588 (JP)**
• **NAITOU, Masahiro Tokyo 1158588 (JP)**
• **MIZUTANI, Go Tokyo 1158588 (JP)**
• **KOBAYASHI, Daisuke Tokyo 1158588 (JP)**

(74) Representative: **Gille Hrabal Struck Neidlein Prop Roos Patentanwälte Brucknerstrasse 20 40593 Düsseldorf (DE)**

(54) **ULTRAVIOLET CURABLE RESIN COMPOSITION AND CURED PRODUCT THEREOF**

(57) The present invention relates to an optical disc having a cured product layer of an ultraviolet-curable resin composition containing (A) dicyclopentenyloxyethyl acrylate, (B) urethane (meth)acrylate and/or (C) epoxy (meth)acrylate, and (D) photopolymerization initiator, and a resin composition for the cured product layer thereof and a cured product therewith; and the optical disc of the present invention has less warping after curing and is excellent in transparency and durability and therefore suitable for next generation high density optical discs where recording and/or reproducing are performed using a blue laser; the resin composition for said cured product layer has less deterioration with age and less viscosity change in recycle and is suitable for a coating agent of optical discs and for efficient production of optical discs.

**Description**

Technical Field

The present invention relates to an optical disc having a cured product layer and an ultraviolet-curable resin composition (hereinafter, also referred to as the present resin composition) therefor, and the optical disc has less warping particularly after curing and is excellent in transparency and durability and suitable for next generation high density optical discs. In addition, the resin composition for it is suitable for efficient production of said optical disc.

Background Art

Common optical disc recording mediums practically used at present include CD (compact disc), MO (magneto-optical disc), CD-R (compact disc recordable), CD-RW (compact disc rewritable) and the like. These have a recording film and a reflective film formed on a 1.2 mm polycarbonate substrate and a cured product layer (protective layer) of an ultraviolet curable coating agent provided for the purpose of protecting them from external factors. In addition, DVD-R, DVD-RW, DVD-RAM, DVD+R, DVD+RW and the like where two polycarbonate substrates having a thickness of 0.6 mm which is half a conventional thickness are bonded for further improvement of a memory capacity have recently been put into practice use. The problem of birefringence of polycarbonate substrates is overcome and the challenge to decrease the laser spot diameter is achieved by bonding two polycarbonate substrates in these optical discs. These all have a recording film, a reflective film and the like formed on a 0.6 mm polycarbonate substrate as well as an ultraviolet curable protective layer or adhesive layer provided for the purpose of protecting and bonding similarly as above.

However, the capacity of DVD recording mediums has been insufficient as a recording medium meeting high capacity in the age of digital broadcasting. Then, as a next generation high density optical disc, an optical disc where a recording layer and a 100 $\mu$m transparent cover layer (protective layer) are laminated on the substrate so that writing and reading are performed not from the polycarbonate substrate but from the side of the transparent cover layer by using a blue laser beam has been proposed (in Patent Literature 1) and already put into practical use.

The method of forming this cover layer includes two methods, a method where an about 100 $\mu$m transparent film is laminated and a method where a resin solution is used as a coating agent to coat by a spin coating method followed by forming by ultraviolet curing; and as a resin solution for the latter, a resin composition containing an urethane (meth) acrylate compound and epoxy (meth)acrylate has been proposed (in Patent Literature 2 and Patent Literature 3).

[Patent Literature 1] JP H11-273147
[Patent Literature 2] JP 2002-230831
[Patent Literature 3] JP 2005-171154

Disclosure of the Invention

Problems to Be Solved by the Invention

In order to uniformly coat a transparent cover layer at a thickness of about 100 $\mu$m by a spin coating method, it is very important that the viscosity change of a coating agent is small. In particular, a coating agent in the spin off step scatters in the form of mist and is collected into a collection tank by inlet blow, and then is mixed with a new liquid again for recycling after a defoaming process. The problem remains that the recycled coating agent has a viscosity which is changed compared with a virgin coating agent because the component ratio of the diluent monomer in a recycled coating agent is changed. As a result, the conditions of spin coating set up at first don't allow constant controlling of film thickness, and therefore it is very difficult to control the film thickness in recycle use.

For this reason, the situation is that a coating agent which has less warping after curing, is excellent in transparency and durability, and can be produced efficiently in a disc production process has yet to be provided in the market.

In addition, optical discs provided in the market are further applied with hard coat treatment on the surface of said cover coat layer in terms of fingerprint resistance, hardness and the like of said cover coat layer, and therefore the production process has a plural of steps and is complicated.

Means of Solving the Problems

The present inventors have intensively studied to solve the above problems and found that the combination use of dicyclopentenyloxyethyl acrylate with an urethane (meth)acrylate compound and epoxy (meth)acrylate can solve the problem in recycle use and can provide an optical disc which has less warping after curing, is excellent in transparency and durability and has a cover coat layer whose production process is easy; and completed the present invention. That is, the present invention relates to the invention described in the following (1) to (23).

(1) An optical disc having a cured product layer of an ultraviolet-curable resin composition containing (A) dicyclopentenyloxyethyl acrylate, (B) urethane (meth)acrylate and/or (C) epoxy (meth)acrylate and (D) a photopolymerization initiator.

(2) The optical disc according to the above (1), wherein the cured product layer is a cured product layer of an ultraviolet-curable resin composition containing 5 to 60% by weight of dicyclopentenyloxyethyl acrylate (A), 5 to 55% by weight of urethane (meth)acrylate (B) and/or 5 to 55% by weight of epoxy (meth)acrylate (C) and 2 to 15% by weight of a photopolymerization initiator (D).

(3) The optical disc according to the above (1), wherein the cured product layer is a cured layer of an ultraviolet-curable resin composition containing 5 to 60% by weight of dicyclopentenyloxyethyl acrylate (A), 10 to 45% by weight of urethane (meth)acrylate (B) and/or 10 to 45% by weight of epoxy (meth)acrylate (C) and 2 to 15% by weight of a photopolymerization initiator (D).

(4) The optical disc according to the above (1), wherein the epoxy (meth)acrylate (C) is bisphenol A type epoxy diacrylate.

(5) The optical disc according to the above (1), wherein the photopolymerization initiator (D) is one or more kinds selected from the group consisting of 1-hydroxycyclohexylphenylketone, 1-[4-(2-hydroxyethoxy)-phenyl]-2-hydroxy-2-methyl-1-propan-1-one, 2-hydroxy-1-(4-[4-(2-hydroxy-2-methyl-propionyl)-benzyl]-phenyl)-2-methyl-propan-1-one and oligo{2-hydroxy-2-methyl-1-[4-(1-methylvinyl)phenyl]propanone}

(6) The optical disc according to the above (1), wherein the urethane (meth)acrylate (B) is a reaction product of at least one kind polyol selected from the group consisting of polyester polyol, polyether polyol and caprolactone alcohol; diisocyanate; and 2-hydroxyethyl acrylate.

(7) The optical disc according to the above (1), wherein the epoxy (meth)acrylate (C) is bisphenol A type epoxy diacrylate, and the urethane (meth)acrylate (B) is a reaction product of at least one kind polyol selected from the group consisting of polyester polyol, polyether polyol and caprolactone alcohol; diisocyanate; and 2-hydroxyethyl acrylate.

(8) The optical disc according to any one of the above (1) to (7), wherein the cured product layer is a protective coat layer for a light transmitting layer of an optical disc where recording and/or reproducing are performed by a blue laser.

(9) The optical disc according to any one of the above (1) to (7), characterized in that the ultraviolet-curable resin composition further contains a dimethyl silicone compound ingredient (F) having a reactive unsaturated group and the optical disc does not have a hard coat layer on the surface of the cured product layer of said resin composition.

(10) The optical disc according to any one of the above (1) to (7), wherein the cured product layer is a protective coat layer for a light transmitting layer of an optical disc provided with a (semitransparent) reflective film consisting of a silver or silver alloy.

(11) An ultraviolet-curable resin composition for optical discs, characterized by containing (A) dicyclopentenyloxyethyl acrylate, (B) urethane (meth)acrylate and/or (C) epoxy (meth)acrylate, and (D) a photopolymerization initiator.

(12) The ultraviolet-curable resin composition for optical discs according to the above (11), wherein 5 to 60% by weight of dicyclopentenyloxyethyl acrylate (A), 5 to 55% by weight of urethane (meth)acrylate (B) and/or 5 to 55% by weight of epoxy (meth)acrylate (C), and 2 to 15% by weight of a photopolymerization initiator (D) are contained in terms of the ratio in the resin composition.

(13) The ultraviolet-curable resin composition for optical discs according to the above (11), wherein 5 to 60% by weight of dicyclopentenyloxyethyl acrylate (A), 10 to 45% by weight of urethane (meth)acrylate (B) and/or 10 to 45% by weight of epoxy (meth)acrylate (C), and 2 to 15% by weight of a photopolymerization initiator (D) are contained in terms of the ratio in the resin composition.

(14) The ultraviolet-curable resin composition for optical discs according to the above (11), wherein the epoxy (meth)acrylate (C) is bisphenol A type epoxy diacrylate.

(15) The ultraviolet-curable resin composition for optical discs according to the above (11), wherein the photopolymerization initiator (D) is one or more kinds selected from the group consisting of 1-hydroxycyclohexylphenylketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one and oligo{2-hydroxy-2-methyl-1-[4-(1-methylvinyl)phenyl]propanone}.

(16) The ultraviolet-curable resin composition for optical discs according to the above (11), wherein the urethane (meth)acrylate (B) is a reaction product of (i) at least one kind polyol selected from the group consisting of polyester polyol, polyether polyol and caprolactone alcohol, (ii) diisocyanate and (iii)2-hydroxyethyl acrylate.

(17) The ultraviolet-curable resin composition for optical discs according to the above (11), wherein the ultraviolet-curable resin composition further contains a dimethyl silicone compound ingredient (F) having a reactive unsaturated group.

(18) The ultraviolet-curable resin composition for optical discs according to the above (11), wherein the epoxy (meth) acrylate (C) is bisphenol A type epoxy diacrylate, and the urethane (meth)acrylate (B) is a reaction product of, at least one kind polyol selected from the group consisting of polyester polyol, polyether polyol and caprolactone alcohol; diisocyanate; and 2-hydroxyethyl acrylate.

(19) The ultraviolet-curable resin composition for optical discs according to the above (11), wherein 5 to 60% by weight of dicyclopentenyloxyethyl acrylate (A), 0 to 60% by weight of urethane (meth)acrylate (B) and/or 0 to 70% by weight of epoxy (meth)acrylate (C) where the total amount of the urethane (meth)acrylate (B) and the epoxy (meth)acrylate (C) is 46 to 70%, and 2 to 15% by weight of photopolymerization initiator (D) are contained in terms of the ratio relative to the whole resin composition.

(20) The ultraviolet-curable resin composition for optical discs according to the above (11), wherein the total content of dicyclopentenyloxyethyl acrylate (A) and acrylate monomer (E) which is not included in (A) to (C) and (F) is 30 to 60% by weight and the content of the ingredient (E) is 0 to 30% by weight; the content of a photopolymerization initiator (D) is 2 to 15% by weight; the content of the dimethyl silicone compound ingredient (F) having a reactive unsaturated group is 0 to 5% by weight; either one kind of urethane (meth)acrylate (B) or epoxy (meth)acrylate (C) or the both is 20 to 68%; relative to the whole resin composition.

(21) The ultraviolet-curable resin composition for optical discs according to any one of the above (11) to (16), wherein the viscosity of the ultraviolet-curable resin composition measured at 25°C by an E type viscometer is 400 to 6,000 mPa·S.

(22) The ultraviolet-curable resin composition for optical discs according to any one of the above (11) to (16), wherein the viscosity of the ultraviolet-curable resin composition measured at 25°C by an E type viscometer is 1,200 to 3,000 mPa·S.

(23) A cured product obtained by curing the ultraviolet-curable resin composition for optical discs according to any one of the above (11) to (16).

Effect of the Invention

The optical disc having a cover coat layer or a protective layer of the present invention is excellent in transparency and durability, and its production process is easy, and the optical disc is suitable for next generation high density optical discs; the ultraviolet-curable resin composition for optical discs of the present invention to be used therefor enables to provide a next generation high density optical disc which has less warping after curing and is excellent in transparency and durability, and allows easy control of the film thickness and efficient production because it can solve the above problem of the viscosity change in recycle use. Therefore, the present resin composition is extremely useful as a protective coating agent for light transmitting layers which form a light transmitting layer of optical discs to perform recording and/or reproducing using a blue laser.

In addition, the cured product layer of the present resin composition containing a dimethyl silicone compound ingredient (F) having a reactive unsaturated group is excellent in fingerprint resistance and thus a hard coat layer does not need to be formed on the cover coat layer. This enables improvement of production efficiency and extremely useful in terms of production process.

Best Mode for Carrying out the invention

The optical disc having the cured product layer of the present invention is suitable as a next generation high density optical disc using a blue laser and also as an optical disc using a conventional red laser. In addition, the present invention also provides an ultraviolet-curable resin composition for said cured product layer, and said resin composition is suitable as a protective coating agent for light transmitting layers as well as can be used as a protective layer of optical discs using a red laser, and thus can be widely applied as a protective coating agent for optical discs.

Hereinafter, the present invention will be more specifically explained.

The present resin composition contains (A) dicyclopentenyloxyethyl acrylate, (B) urethane (meth)acrylate and/or (C) epoxy (meth)acrylate and (D) a photopolymerization initiator as essential ingredients.

In the present resin composition, dicyclopentenyloxyethyl acrylate (A) is used as an essential ingredient of its diluent ingredient. The dicyclopentenyloxyethyl acrylate includes FA-512A and FA-512AS which are trade names manufactured by Hitachi Chemical Co., Ltd., and the like. In particular, FA-512AS is produced by the transesterification process and thus easily available compared with the existing process. Accordingly, dicyclopentenyloxyethyl acrylate produced by the transesterification process is preferable. The use amount in the composition is 5 to 60% by weight (hereinafter, % represents "% by weight" unless otherwise noted), preferably 15 to 60%, and more preferably 25 to 60%, and further preferably more than 30%, for example 31% or more and 60% or less, relative to the whole composition.

Ingredient (A) can be used in combination with ingredient (E) described afterward and ingredient (A) and ingredient (E) are preferably contained in a total content of 30 to 60% in the present resin composition.

The urethane (meth)acrylate (B) to be contained in the resin composition can be obtained by reacting polyhydric alcohol having two or more hydroxy groups in a molecule with an organic polyisocyanate compound and a hydroxy (meth)acrylate compound.

The polyhydric alcohol includes, for example, neopentyl glycol, 3-methyl-1,5-pentanediol, ethylene glycol, propylene glycol, 1,4-butanediol, 1,6-hexanediol, trimethylolpropane, pentaerythritol, tricyclodecane dimethylol, bis-[hydroxymethyl]-cyclohexane and the like; polyester polyol obtained by reacting these polyhydric alcohols with polybasic acid (for example, succinic acid, phthalic acid, hexahydrophthalic anhydride, terephthalic acid, adipic acid, azelaic acid, tetrahydrophthalic anhydride and the like); polycaprolactone polyalcohol obtained by reacting polyhydric alcohol with $\varepsilon$-caprolactone; polycarbonate polyol (for example, polycarbonate diol obtained by reacting 1,6-hexanediol with diphenyl carbonate, and the like); polyether polyol (for example, polyethylene glycol, polypropylene glycol, polytetramethylene glycol, ethylene oxide modified bisphenol A and the like) or the like. Typically, polyhydric alcohol selected from the group consisting of polyester polyol, polyether polyol and polycaprolactone polyalcohol is used. More preferable is polyether polyol or polycaprolactone polyalcohol. The polyether polyol is preferably poly C2 to C4 ether diol, and more preferably polypropylene or polytetramethylene glycol. The polycaprolactone polyalcohol is more preferably polycaprolactone diol. Typically, the molecular weight of these is preferably about 400 to 4,000, more preferably about 500 to 2,000, and further preferably about 500 to 1,500.

The organic polyisocyanate includes, for example, isophorone diisocyanate, hexamethylene diisocyanate, tolylene diisocyanate, xylene diisocyanate, diphenylmethane-4,4'-diisocyanate, dicyclopentanyl isocyanate or the like. Preferable is isophorone diisocyanate or tolylene diisocyanate.

The hydroxy (meth)acrylate compound includes, for example, hydroxy C2 to C7 alkyl (meth)acrylate such as hydroxyethyl (meth)acrylate, hydroxypropyl (meth)acrylate, hydroxybutyl (meth)acrylate, dimethylol cyclohexyl mono(meth)acrylate and hydroxycaprolactone (meth)acrylate. Among them, hydroxyethyl (meth)acrylate is more preferable.

The reaction is carried out as follows. That is, organic polyisocyanate is mixed with polyhydric alcohol so that the ratio is preferably 1.1 to 2.0 equivalents of the isocyanate group per 1 equivalent of the hydroxy group, and the reaction is carried out preferably at a reaction temperature of 70 to 90°C to synthesize urethane oligomer. The urethane oligomer was then mixed with a hydroxy (meth)acrylate compound so that the ratio is 1 to 1.5 equivalent of the hydroxy group per 1 equivalent of the isocyanate group of the urethane oligomer, and the reaction is carried out at 70 to 90°C to obtain the intended urethane (meth)acrylate.

The preferable urethane (meth)acrylate is urethane (meth)acrylate obtained by using polyhydric alcohol selected from the group consisting of polyester polyol, polyether polyol and polycaprolactone polyalcohol as polyhydric alcohol, more preferably polyether polyol (preferably, poly C2 to C4 ether diol) or polycaprolactone diol; isophorone diisocyanate or tolylene diisocyanate as organic polyisocyanate; and hydroxy C2 to C7 alkyl (meth)acrylate as a hydroxy (meth)acrylate compound, more preferably hydroxyethyl (meth)acrylate. One or more kinds of the above urethane (meth) acrylates (B) can be mixed for use at any ratio. The content of the urethane (meth)acrylate (B) in the present composition may be zero depending on the content of the epoxy (meth)acrylate (C), and is typically about 0 to 60%, preferably 5 to 60%, more preferably about 5 to 55%, and optionally 5 to 45% and preferably 7 to 40%, to the whole present composition. In addition, it is optionally 10 to 45%, preferably 15 to 40%. The molecular weight of the urethane (meth)acrylate (B) is preferably 400 to 10,000, more preferably about 500 to 8,000.

The epoxy (meth)acrylate (C) to be contained in the present resin composition preferably includes epoxy (meth) acrylate having two or more epoxy groups in a molecule, which is obtained by reaction of epoxy resin with (meth)acrylic acid. Preferable is epoxy (meth)acrylate obtained by carrying out the reaction of (meth)acrylic acid typically in the equivalent range of 0.5 to 2, more preferably about 0.7 to 1.2, and further preferably about 1 equivalent, relative to 1 equivalent of the epoxy group of the epoxy resin until that the acid value becomes preferably about 0.2 to 1 mg·KOH/g, more preferably about 0.3 to 0.7 mg·KOH/g and further preferably about 0.4 to 0.6 mg·KOH/g. The epoxy resin to be a material is not particularly limited, but includes, for example, phenyl diglycidyl ethers such as hydroquinone diglycidyl ether, catechol diglycidyl ether and resorcinol diglycidyl ether; bisphenol type epoxy compounds such as bisphenol A type epoxy resin, bisphenol F type epoxy resin, bisphenol S type epoxy resin and epoxy compound of 2,2-bis(4-hydroxyphenyl)-1,1,1,3,3,3-hexafluoropropane; hydrogenated bisphenol type epoxy compounds such as hydrogenated bisphenol A type epoxy resin, hydrogenated butanediol F type epoxy resin, hydrogenated bisphenol S type epoxy resin and epoxy compound of hydrogenated 2,2-bis(4-hydroxyphenyl)-1,1,1,3,3,3-hexafluoropropane; halogenated bisphenol type epoxy compounds such as brominated bisphenol A type epoxy resin and brominated bisphenol F type epoxy resin; EO/PO modified bisphenol type epoxy resin; alicyclic diglycidyl ether compounds such as cyclohexanedimethanol diglycidyl ether compound; aliphatic diglycidyl ether compounds such as 1,6-hexanediol diglycidyl ether, 1,4-butanediol diglycidyl ether and diethylene glycol diglycidyl ether; polysulfide type diglycidyl ether compounds such as polysulfide diglycidyl ether; biphenol type epoxy resin; polyether type epoxy resin; and the like. Among them, bisphenol A type epoxy resin is preferable.

The commercial products of these epoxy compounds include, for example, bisphenol A type epoxy resins such as jER 828, jER 1001, jER 1002, jER 1003 and jER 1004 (which are all manufactured by Japan Epoxy Resins Co., Ltd.), Epomic$^{RTM}$ R-140, Epomic R-301 and Epomic R-304 (which are all manufactured by Mitsui Chemical, Inc.), DER-331, DER-332 and DER-324 (which are all manufactured by The Dow Chemical Company), EPICLON 840 and EPICLON 850 (which are all manufactured by DIC Corporation), UVR-6410 (manufactured by Union Carbide Corporation ), and YD-8125 (manufactured by Tohto Kasei Co.,Ltd. ); bisphenol F type epoxy resins such as UVR-6490 (manufactured by Union Carbide Corporation ), YDF-2001, YDF-2004 and YDF-8170 (which are all manufactured by Tohto Kasei Co., Ltd.), and EPICLON 830 and EPICLON 835 (which are all manufactured by DIC Corporation); hydrogenated bisphenol A type epoxy resins such as HBPA-DGE (manufactured by Maruzen Petrochemical Co., Ltd.) and RIKARESIN HBE-100 (manufactured by New Japan Chemical Co., Ltd. ); brominated bisphenol A type epoxy resins such as DER-513, DER-514 and DER-542 (which are all manufactured by The Dow Chemical Company); PO modified bisphenol A type epoxy resins such as Epolite 3002 (manufactured by Kyoeisha Chemical Co.,Ltd.); alicyclic epoxy resins such as Celloxide$^{RTM}$ 2021 (manufactured by Daicel Chemical Industries Ltd), RIKARESIN DME-100 (manufactured by New Japan Chemical Co., Ltd.) and EX-216 (manufactured by Nagase ChemteX Corporation); aliphatic diglycidyl ether compounds such as ED-503 (manufactured by ADEKA Corporation), RIKARESIN W-100 (manufactured by New Japan Chemical Co., Ltd.) and EX-212, EX-214 and EX-850 (which are all manufactured by Nagase ChemteX Corporation); polysulfide type diglycidyl ether compounds such as FLEP-50 and FLEP-60 (which are all manufactured by Toray Thiokol Co., Ltd. ); biphenol type epoxy compounds such as YX-4000 (manufactured by Japan Epoxy Resins Co., Ltd.); polyether type epoxy compounds such as Epolite$^{RTM}$ 100E and Epolite 200P (which are all manufactured by Kyoeisha Chemical Co., Ltd.).

One or more kinds of the above epoxy (meth)acrylates (C) can be mixed for use at any ratio. The content of epoxy (meth)acrylate (C) in the present resin composition may be zero, and is 0 to 65%, 5 to 55%, preferably 5 to 45%, and more preferably 7 to 40%, relative to the whole composition. In addition, it may be optionally 10 to 45%, more preferably 15 to 40%.

The photopolymerization initiator (D) to be contained in the present resin composition includes 1-hydroxycyclohexylphenyl ketone (IRGACURE$^{RTM}$ 184), 1-[4-(2-hydroxyethoxy)-phenyl]-2-hydroxy-2-methyl-1-propan-1-one (IRGACURE 2959), 2-hydroxy-1-{4-[4-(2-hydroxy-2-methylpropionyl)-benzyl]-phenyl}-2-methyl-propan-1-one (IRGACURE 127), 2,2-dimethoxy-2-phenylacetophenone (IRGACURE 651) (which are all manufactured by CIBA Speciality Chemicals); oligo[2-hydroxy-2-methyl-1-[4-(1-methylvinyl)phenyl]propanone] (Esacure ONE; manufactured by Lamberti), 2-hydroxy-2-methyl-1-phenyl-propan-1-one (DAROCUR 1173; manufactured by CIBA Speciality Chemicals); 2-methyl-1-[4-(methylthio)phenyl]-2-morpholinopropan-1-one (IRGACURE 907; manufactured by CIBA Speciality Chemicals), 2-benzyl-2-dimethylamino-1-(4-morpholinophenyl)-butan-1-one, 2-chlorothioxanthone, 2,4-dimethylthioxanthone, 2,4-diisopropylthioxanthone, isopropylthioxanthone, 2,4,6-trimethylbenzoyldiphenylphosphineoxide (Lucirin TPO: manufactured by BARF), bis(2,4,6-trimethylbenzoyl)-phenyl phosphine oxide (IRGACURE 819; manufactured by CIBA Speciality Chemicals), bis(2,6-dimethoxybenzoyl)-2,4,4-trimethylpentylphosphineoxide and the like.

The photopolymerization initiator (D) preferably includes 1-hydroxycyclohexylphenylketone (IRGACURE 184), 1-[4-(2-hydroxyethoxy)-phenyl]-2-hydroxy-2-methyl-1-propan-1-one (IRGACURE 2959), 2-hydroxy-1-{4-[4-(2-hydroxy-2-methyl-propionyl)-benzyl]-phenyl}-2-methyl-propan-1-one (IRGACURE 127) (which are all manufactured by CIBA Speciality Chemicals ), oligo{2-hydroxy-2-methyl-1-[4-(1-methylvinyl)phenyl]propanone} (Esacure ONE; manufactured by Lamberti), 2-methyl-1-[4-(methylthio)phenyl]-2-morpholinopropan-1-one (IRGACURE 907; manufactured by CIBA Speciality Chemicals), 2,4,6-trimethylbenzoyl diphenyl phosphine oxide (Lucirin TPO: manufactured by BASF), bis(2,4,6-trimethylbenzoyl)-phenyl phosphine oxide (IRGACURE 819; manufactured by CIBA Speciality Chemicals).

One of these photopolymerization initiators can be used alone or a plural of these can be mixed for use at any ratio. The photopolymerization initiator may be typically used alone, but optionally can be used in combination with a photopolymerization initiating auxiliary agent such as amines.

The content of the photopolymerization initiator (D) in the present resin composition is preferably 2 to 15%, particularly preferably 3 to 10%.

The photopolymerization initiating auxiliary agent such as amines which can be used in the present invention includes for example, diethanolamine, 2-dimethylaminoethylbenzoate, dimethylaminoacetophenone, p-dimethylaminobenzoic acid ethylester, p-dimethylaminobenzoic acid isoamylester. When a photopolymerization initiating auxiliary agent is used in combination, the content in the ultraviolet-curable resin composition of the present invention is 0 to 5%, preferably 0.05 to 5%, and particularly preferably 0.1 to 3%.

In the present resin composition, the dicyclopentenyloxyethyl acrylate (A) is preferably used as a diluent ingredient in a certain amount or more, and it may be used alone but also may be optionally used in combination with an ethylenically unsaturated compound (typically in a liquid form of an ordinary temperature) which does not belong to (A) to (C) or (F), as a diluent ingredient (E) other than it. Said ethylenically unsaturated compound can include (meth)acrylate monomers, acrylate oligomers and the like, and more preferably is (meth)acrylate monomer. They may be optionally used.

(Meth)acrylate monomers which can be used as said (E) ingredient (diluent ingredient) are classified into a monofunctional monomer having a (meth)acrylate group in a molecule and a polyfunctional monomer having two or more (meth)acrylate groups in a molecule. In the present invention, any of them can be suitably used.

The monofunctional monomer having a (meth)acrylate group in a molecule includes, for example, tricyclodecane (meth) acrylate, dicyclopentanyl (meth)acrylate, isobornyl (meth)acrylate, adamantyl (meth)acrylate, 4-acryloylmorpholine, phenyloxyethyl (meth)acrylate, phenoxy diethyleneglycol (meth)acrylate, nonylphenyloxyethyl (meth)acrylate, benzyl (meth) acrylate, tetrahydrofurfuryl (meth)acrylate, morpholine (meth)acrylate, 2-hydroxy-3-phenoxypropyl (meth)acrylate, lauryl (meth)acrylate, methoxy tripropylene glycol mono(meth)acrylate, 2-hydroxyethyl (meth)acrylate, 2-hydroxypropyl (meth) acrylate, ethylcarbitol (meth)acrylate and the like.

On the other hand, the (meth)acrylate monomer having two or more (meth)acrylate groups in a molecule includes, for example, neopentyl glycol di(meth)acrylate, tricyclodecane dimethylol di(meth)acrylate, hydroxy pivalaldehyde modified trimethylolpropane di(meth)acrylate, hydroxypivalic acid neopentyl glycol di(meth)acrylate, polyethylene glycol di(meth)acrylate, dicyclopentanyl di(meth)acrylate, 1,6-hexanediol di(meth)acrylate, dipropylene glycol di(meth) acrylate, tripropylene glycol di(meth)acrylate, polypropylene glycol di(meth)acrylate, ethylene oxide modified neopentyl glycol di(meth)acrylate, propyleneoxide modified neopentyl glycol di(meth)acrylate, ethylene oxide modified 1,6-hexanediol di(meth)acrylate, propyleneoxide modified 1,6-hexanediol di(meth)acrylate, ethylene oxide modified bisphenol A di(meth)acrylate, ethylene oxide modified trimethylolpropane tri(meth)acrylate, ethylene oxide modified pentaerythritol tetra(meth)acrylate, tris[(meth)acryloxyethyl]isocyanurate, ethylene oxide modified dipentaerythritol hexa(meth)acrylate and the like.

The (meth)acrylate monomer of said diluent ingredient (E) is preferably (meth)acrylate monomer containing an ester represented by the following formula:

$$(CH_2=CR_1COO)nR_2$$

(wherein, $R_1$ represents hydrogen or methyl, n represents 1 to 4 (preferably 1 to 2), $R_2$ represents an ester residue group, an aliphatic or aromatic ester residual group containing 5 to 15 carbon atoms, preferably 5 to 12 carbon atoms which may have hydroxy substitution as well as 0 to 5 ether oxygen atoms linking carbon atoms) and modified form thereof, and among the listed compounds, compounds included in the above formula are preferable compounds. In addition, the modified form of ester compounds of the above formula is a modified form with C1 to C3 alkylene oxide. Further, in terms of productivity stability, phenoxy diethyleneglycol (meth)acrylate, 2-hydroxy-3-phenoxypropyl (meth) acrylate, methoxy tripropylene glycol mono(meth)acrylate, (meth)acrylate monomer having two or more functionals with a large molecular weight such as, for example, 4 mole ethylene oxide modified bisphenol A type diacrylate or the like is preferable.

As the ingredient (E), one kind of (meth)acrylate monomers may be used, or two or more kinds may be mixed for use at any ratio. The content of this ingredient (E) in the present resin composition is typically about 0 to 30%, more preferably about 0 to 20% relative to the whole composition. When the ingredient (E) is used, it is preferably 1% or more, more preferably 2% or more, relative to the whole composition, and its upper limit is as described above.

In the present resin composition, dimethyl silicone compound (F) having a reactive unsaturated group can be contained as an ingredient other than the above (A) to (E). This case is more preferable because, for example, more desired effects are achieved in fingerprint resistance and the like.

As the dimethyl silicone compound (F) having said reactive unsaturated group, any can be used as long as it is crosslinked together in photopolymerization reaction. Such a reactive unsaturated group in said F ingredient can preferably include ethylenically unsaturated groups, preferably (meth)acryloyl groups or (meth)acrylamide groups. Therefore, said F ingredient is preferably a compound where such a group is bonded to a (poly)dimethylsiloxane skeleton. That is, it is preferably a (poly)dimethylsiloxane compound where a ethylenically unsaturated group is bonded, further preferably a (poly)dimethylsiloxane where a (meth)acryloyl group or a (meth)acrylamide group is bond. Most preferable is a (poly) dimethylsiloxane compound where a (meth)acryloyl group is bonded. Any of a methacryloyl group and an acryloyl group may be bonded, but optionally an acryloyl group is preferable.

The (poly)dimethylsiloxane compound having an ethylenically unsaturated group includes, for example, BYK-UV-3500, BYK-UV-3530 and BYK-UV-3570 which are all manufactured by BYK Japan KK; and FK-353, X-22-1602, X-22-1603, X-22-2445, X-22-2457, X-22-2458, X-22-2459, X-22-4272 and X-22-6266 which are all manufactured by Shin-Etsu Chemical Co., Ltd.; and the like.

The above ingredients as (F) may be used alone or two or more kinds of them may be mixed for use at any ratio. The content relative to the whole composition in the present resin composition is about 0 to 5%, preferably 0.05 to 5%, further preferably 0.1 to 3% and most preferably about 0.3 to 2%.

The ultraviolet curable layer of the present resin composition having said (F) ingredient has high fingerprint resistance, and therefore when used as a cover coat layer of optical discs, it does not need to be further provided with a hard coat layer on its surface as in the case of a conventional cover coat layer, resulting in that production of optical discs can be easier.

The present resin composition does not need to contain a high-polymer, but if necessary, can contain a polyester based, polycarbonate based, polyacryl based, polyurethane based or polyvinyl based resin as a high-polymer. In addition, according to necessity, additives such as organic solvents, silane coupling agents, polymerization inhibitors, leveling agents, light stabilizers, antioxidants, antistatic agents, surface lubricants and fillers can be used in combination. The preferable composition of the present resin composition can include the following compositions:

(I) An ultraviolet-curable resin composition for optical discs, where 5 to 60% by weight of dicyclopentenyloxyethyl acrylate (A), 5 to 55% by weight of urethane (meth)acrylate (B) and/or 5 to 55% by weight of epoxy (meth)acrylate (C), and 2 to 15% by weight of a photopolymerization initiator (D) are contained in terms of the ratio in the resin composition,

(II) An ultraviolet-curable resin composition for optical discs where 5 to 60% by weight of dicyclopentenyloxyethyl acrylate (A), 10 to 45% by weight of urethane (meth)acrylate (B) and/or 10 to 45% by weight of epoxy (meth)acrylate (C), and 2 to 15% by weight of a photopolymerization initiator (D) are contained in terms of the ratio in the resin composition,

(III) An ultraviolet-curable resin composition for optical discs where 5 to 60% by weight of dicyclopentenyloxyethyl acrylate (A), 0 to 60% by weight of urethane (meth)acrylate (B) and/or 0 to 70% by weight of epoxy (meth)acrylate (C) where the total amount of urethane (meth)acrylate (B) and epoxy (meth)acrylate (C) is 46 to 70% by weight, and 2 to 15% by weight of photopolymerization initiator (D) relative to the whole resin composition are contained in terms of the ratio,

(IV) An ultraviolet-curable resin composition for optical discs where the total content of dicyclopentenyloxyethyl acrylate (A) and acrylate monomer (E) which is not included in (A) to (C) and (F) is 30 to 60% by weight, the content of (E) ingredient is 0 to 30% by weight, the content of photopolymerization initiator (D) is 2 to 15% by weight, the content of dimethyl silicone compound ingredient (F) having a reactive unsaturated group is 0 to 5% by weight, and either one or the both of urethane (meth)acrylate (B) and epoxy (meth)acrylate (C) is 20 to 68%, relative to the whole resin composition,

and the like.

The present resin composition can be obtained in that the above ingredients are mixed by stirring at 20 to 80°C and dissolved. The obtained composition may be filtered if needed.

The obtained present resin composition preferably has a viscosity of 400 to 6,000 mPa·S when measured by an E type viscometer at 25°C, more preferably a viscosity of 1,200 to 6,000 mPa·S and further preferably 1,200 to 3,000 mPa·S. The obtained present resin composition can be typically used as a coating agent for optical discs, and the like.

Photo-curing of the present resin composition can be carried out by irradiation of a light ray such as ultraviolet ray or visible light ray to the present resin composition. By said photo-curing, a cured product of the present resin composition can be obtained.

When the present resin composition is used as a coating agent for optical discs, the present resin composition may be coated on an optical disc, for example, a recording layer or a reflective film of an optical disc. By irradiation of a light ray described above to the thin film or thin layer of the present resin composition obtained by coating, an optical disc of the present invention having a cured product layer (or film ) of the present resin composition can be obtained. The cured film on the obtained optical disc functions as a cover coat layer, a protective film or/and the like, as it is. Such obtained cured product layer (or film) of the present resin composition can also play a role of a hard coat layer, and therefore it is typically not necessary to provide a hard coat layer on the cured product layer (or film) of the present resin composition, but a hard coat layer may be further provided on said cured product layer if needed.

The irradiation of a light ray to cure the present resin composition may be carried out using, as a light source, a lamp which can irradiate an ultraviolet to near ultraviolet light ray. Such a lamp includes for example, low pressure, high pressure or ultrahigh pressure mercury lamps, metal halide lamps, (pulse) xenon lamps, electrodeless lamps or the like.

When the present resin composition is used as a coating agent for optical discs, it is preferably used as a protective coating agent for light transmitting layers. When it is coated on an optical disc, it is preferably coated in order to have a film thickness of 10 to 200 μm, preferably 50 to 100 μm, after curing. The coating method is not limited, but typically includes, for example, spin coating methods, 2P methods, roll coating methods, screen printing methods or the like. Typically, spin coating methods are preferable.

In addition, with regard to next generation high density optical discs, a blue laser of about 400 nm is employed in reading and/or writing, and therefore the transmittance at 405 nm in the cured product having a film thickness of 90

to 100 μm is preferably 80% or more.

Further, in the optical disc according to the present invention, the cured product layer of the present resin composition is preferably present in the incident side of recording light and/or reproducing light rather than the recording layer or reflecting layer of the optical disc.

Examples

Hereinafter, the present invention will be more specifically explained with Examples.

(1) Production of the present resin composition and comparative example compositions:

The ingredients of (A) to (F) in the composition ratio shown in Tables 1 to 3 described afterward were added in a vessel with an agitator in any sequence order and mixed by stirring at room temperature until it became a homogeneous solution in order to obtain a present resin composition.

In addition, compositions for Comparative Examples were produced in the same manner.

The ingredients and the compositions of resin compositions for Examples 1 to 5 and Comparative Examples 1 to 2 are shown in Table 1. In addition, the ingredients and the compositions for Examples 6 to 10 are shown in Table 2, and the ingredients and the compositions for Examples 11 to 13 and Comparative Example 3 are shown in Table 3. In this connection, the viscosity of each resin composition obtained in Examples measured at 25˚C by an E type viscometer are shown in the section of initial viscosity in Tables 1 to 3.

(2) Production of optical discs of the present invention and optical discs for comparison.

The present resin composition obtained in the above example was coated by a spin coating method on a silver alloy reflective film of an optical disc which was obtained by sputtering treatment of a silver alloy of 100 nm on a polycarbonate substrate having a thickness of 1.2 mm so that the thickness after curing was 90 to 100 μm. The obtained coating film was cured with a Fusion lamp D bulb in an integrated light amount of 1 J/cm$^2$ to obtain an optical disc of the present invention having a cured product layer of the present resin composition of 90 to 100 μm on the silver alloy reflective film.

In addition, discs for comparison were produced in the exact same manner described above.

Hereinafter, the method of the evaluation test will be specifically explained.

(1) Airing test

The airing test described below was carried out to observe the state of the viscosity change in recycling.

In each plastic container (internal diameter: 48 mm, height: 30 mm), 5g of each resin composition obtained in the above Examples and Comparative Examples was put and left for 60 minutes in a blast dryer set up at 60˚C. After 60 minutes, a liquid (resin composition) in said container was stirred with a glass rod to be homogeneous, followed by measurement of its viscosity.

From the values of the initial viscosity of the resin composition measured before the test and the viscosity measured in the above, the viscosity increasing rate was calculated according to the following formula (i):

$$\text{(i) Viscosity increasing rate (\%)} = (\text{viscosity after test} - \text{initial viscosity}) \times 100/\text{initial viscosity}$$

In this connection, viscosity measurement in the airing test employed an E type viscometer.

In addition, judgment in the airing test was conducted according to the following criteria:

○··· Viscosity change rate < 15%.
×··· Viscosity change rate ≧ 15%.

The results of the above airing test and judgment are shown (indicated as "airing test") in Tables 1 to 3.

(2) Durability Test

The optical discs of the present invention and the optical discs for comparison were left for 96 hours under the circumstances of 80˚C and 80 %RH in humidity, and observed on the warping and change in appearance before and after the test.

The film thickness and warping of the cured product layers were measured with the cured product layer on the down side, using Dr. Schenk PROmeteus MT-146.

They were measured at 4 disc internal diameter points of 24 mm, 38 mm, 45 mm and 58 mm, and calculated based on the average value.

The initial warping and the warping after the durability test in Tables were calculated from the measurements of warping of the optical discs before coating the resin composition on the optical discs, warping of the optical discs after coating the resin composition on the optical discs and photo-curing the coated layers, and warping of the optical discs after the durability test, according to the following formula (ii) and formula (iii):

$$\text{(ii) Initial warping} = \text{warping of optical disc after curing coated layer} - \text{warping of optical disc before coating}$$

$$\text{(iii) Warping amount after 96 hours} = \text{warping of optical disc after 96 hours} - \text{initial warping of optical disc having a cured product layer}$$

The unit for warping is "degree". The judgment was made according to the following criteria:

○··· Initial warping > -0.6 and warping amount after 96 hours > -0.6.
×··· Initial warping ≦ -0.6 or/and warping amount after 96 hours ≦ -0.6.

With regard to change in appearance, the corrosion degree of the silver alloy reflective films after 96 hours was visually observed and judgment was made according to with or without color change of silver alloy reflective films. Evaluation was conducted as follows:

○··· Abnormality such as change in color is not observed on the silver alloy reflective film.
×··· Abnormality such as change in color is observed on the silver alloy reflective film.

The results of the above durability test and judgment are shown in Tables 1 to 3.

(3) Transmittance Test

The transmittance of each optical disc (uncoated optical disc) obtained by spattering a silver alloy before coating each resin composition used in Examples and the transmittance of the optical disc of the present invention having the cured product layer obtained in the above Examples were measured at a wavelength of 405 nm, and the transmittance of the optical disc of the present invention was judged based on the transmittance of the uncoated optical disc according the following criteria. In this connection, the measurement of transmittance was conducted using a spectrophotometer (U-3310, manufactured by Hitachi, Ltd.).

The transmittance criteria:

○··· Transmittance at 405 nm is 80% or more.
×···Transmittance at 405 nm is under 80%.

The results of the above measurement and judgment are shown in Tables 1 to 3.

(4) Fingerprint Resistance Test

For fingerprint resistance test, the contact angles with water and oleic acid for the surface of the cured product layer of the optical disc was measured using DCA-VZ manufactured by Kyowa Interface Science Co., Ltd., and judged according to the following criteria. Higher degrees of the contact angle mean more difficult attachment of fingerprint.

○··· Contact angle with water is 90 degrees or more and contact angle with oleic acid is 40 degrees or more.
△··· Either of contact angle with water or contact angle with oleic acid does not satisfy the criteria for ○.
✕··· Contact angle with water is 90 degrees or less and contact angle with oleic acid is under 40 degrees.

The results of the above measurement and judgment are shown in Table 3. In this connection, "part" in Tables represents "part by weight"

[Table 1]

| | Ex. 1 | Ex. 2 | Ex. 3 | Ex. 4 | Comp. Ex. 1 | Comp. Ex. 2 |
|---|---|---|---|---|---|---|
| Ingredient (A) (part) FA-512AS | 40 | 55 | 55 | 40 | | |
| Ingredient (B) (part) UA-1 | | 20 | 20 | | | |
| UA-2 | 20 | | | 20 | 40 | 40 |
| Ingredient (C) (part) EPA-1 | | 25 | 25 | | 15 | 15 |
| EPA-2 | 40 | | | 40 | | |
| Ingredient (D) (part) IRGACURE - 184 | 6 | 6 | 3 | 3 | 5 | 5 |
| IRGACURE - 127 | | | 3 | | | |
| IRGACURE - 2959 | | | | 3 | | |
| Ingredient (E) (part) AM-1 | | | | | 19 | 19 |
| AM-2 | | | | | 11 | 11 |
| AM-3 | | | | | 10 | |
| AM-4 | | | | | | 10 |
| IRGANOX 1520L | | | | | 0.2 | 0.2 |
| (Airing Test) Initial viscosity (mPa·s/25˚C) | 2030 | 1410 | 1520 | 2150 | 1375 | 2233 |
| After airing test (mPa·s/25˚C) | 2120 | 1500 | 1612 | 2240 | 1890 | 3192 |
| Viscosity change rate (%) | 4 | 6 | 6 | 4 | 38 | 43 |
| Airing test judgment | ○ | ○ | ○ | ○ | ✕ | ✕ |
| (Warping) Initial warping | -0.3 | -0.2 | -0.2 | -0.2 | -0.2 | -0.3 |
| Warping amount after 96 hours | -0.5 | -0.4 | -0.1 | -0.4 | -0.4 | -0.5 |
| Warping judgment | ○ | ○ | ○ | ○ | ○ | ○ |
| (Durability) Appearance after 96 hours | ○ | ○ | ○ | ○ | ○ | ○ |
| (Transmittance) Judgment at 405 nm | ○ | ○ | ○ | ○ | ○ | ○ |
| (Total judgment) | ○ | ○ | ○ | ○ | ✕ | ✕ |

| | | Ex. 5 | Ex. 6 | Ex. 7 | Ex. 8 | Ex. 9 | Ex. 10 |
|---|---|---|---|---|---|---|---|
| [Table 2] | | | | | | | |
| Ingredient (A) (part) FA-512AS | | 40 | 25 | 30 | 35 | 35 | 25 |
| Ingredient (B) (part) UA-2 | | | | 20 | 20 | | |
| UA-3 | | 20 | 20 | | | 55 | |
| Ingredient (C) (part) EPA-2 | | 40 | 40 | 35 | 35 | | 65 |
| Ingredient (D) (part) IRGACURE - 184 | | 3 | 5.5 | 5.5 | 5.5 | 5 | 5.5 |
| IRGACURE - 907 | | | | | | 1 | |
| Esacure ONE-S | | 3 | | | | | |
| Lucirin TPO | | | 0.5 | | 0.5 | | 0.5 |
| IRGACURE - 819 | | | | 0.3 | | | |
| Ingredient (E) (part) AM-1 | | | | | 10 | | |
| AM-5 | | | | | | 10 | |
| AM-6 | | | 5 | | | | |
| AM-7 | | | | 5 | | | |
| AM-8 | | | 10 | | | | |
| AM-9 | | | | | 10 | | |
| AM-10 | | | | | | | 10 |
| AM-11 | | | | | 0.5 | | |
| ((airing test)) Initial viscosity (mPa·s/25˚C) | | 2185 | 1508 | 1861 | 1790 | 2121 | 1947 |
| After airing test (mPa·s/25˚C) | | 2267 | 1605 | 1978 | 1897 | 2227 | 2068 |
| Viscosity change rate (%) | | 4 | 6 | 6 | 6 | 5 | 6 |
| Airing test judgment | | ○ | ○ | ○ | ○ | ○ | ○ |
| (warping) Initial warping | | -0.1 | -0.1 | -0.2 | -0.2 | -0.1 | -0.1 |
| Warping amount after 96 hours | | -0.3 | -0.5 | -0.4 | -0.5 | -0.3 | -0.4 |
| Warping judgment | | ○ | ○ | ○ | ○ | ○ | ○ |
| (Durability) Appearance after 96 hours | | ○ | ○ | ○ | ○ | ○ | ○ |
| (Transmittance) Judgment at 405 nm | | ○ | ○ | ○ | ○ | ○ | ○ |
| (Total judgment) | | ○ | ○ | ○ | ○ | ○ | ○ |

[Table 3]

|  | Ex. 11 | Ex. 12 | Ex. 13 | Comp. Ex. 3 |
|---|---|---|---|---|
| Ingredient (A) (part) FA-512AS | 40 | 25 | 35 | |
| Ingredient (B) (part) UA-2 | | | | 40 |
| UA-3 | 20 | 20 | 55 | |
| Ingredient (C) (part) EPA-1 | | | | 15 |
| EPA-2 | 40 | 40 | | |
| ingredient (D) (part) IRGACURE - 184 | 3 | 5.5 | 5 | 5 |
| IRGACURE - 907 | | | 1 | |
| Esacure ONE-S | 3 | | | |
| Lucirin TPO | | 0.5 | | |
| Ingredient (E) (part) AM-1 | | | | 19 |
| AM-2 | | | | 11 |
| AM-3 | | | | 10 |
| AM-4 | | | | |
| AM-5 | | | 10 | |
| AM-6 | | 5 | | |
| AM-8 | | 10 | | |
| IRGANOX 1520L | | | | 0.2 |
| Ingredient (F) (part) BYK-UV-3570 | 1 | 1 | 1 | |
| (Airing test ) Initial viscosity (mPa·s/25°C) | 2187 | 1511 | 2123 | 1947 |
| After airing test (mPa·s/25°C) | 2272 | 1608 | 2230 | 2068 |
| Viscosity change rate (%) | 4 | 6 | 5 | 6 |
| Airing test judgment | ○ | ○ | ○ | × |
| (Warping) Initial warping | -0.1 | -0.1 | -0.1 | -0.1 |
| Warping amount after 96 hours | -0.3 | -0.5 | -0.3 | -0.4 |
| Warping judgment | ○ | ○ | ○ | ○ |
| (Durability) Appearance after 96 hours | ○ | ○ | ○ | ○ |
| (Transmittance) Judgment at 405 nm | ○ | ○ | ○ | ○ |
| (Fingerprint resistance test : contact angle) Water | 95 | 96 | 96 | 62 |
| Oleic acid | 51 | 52 | 52 | 8 |

(continued)

| | Ex. 11 | Ex. 12 | Ex. 13 | Comp. Ex. 3 |
|---|---|---|---|---|
| Judgment of contact angle | ○ | ○ | ○ | × |
| (Total judgment) | ○ | ○ | ○ | × |

Note: "Ex." stands for "Example" and "Comp. Ex." stands for "Comparative Examples".

In this connection, abbreviations in each composition shown in Tables are as follows. FA-512AS: dicyclopentenyloxyethyl acrylate, manufactured by Hitachi Chemical Co., Ltd.

UA-1: urethane acrylate obtained by reaction of 2 mol of polycaprolactone diol (molecular weight: 800) with 3 mol of isophorone diisocyanate and then reaction of the reaction product with 2 mol of 2-hydroxyethyl acrylate.

UA-2: urethane acrylate obtained by reaction of 1 mol of polytetramethylene glycol (molecular weight: 800) with 2 mol tolylene diisocyanate and then reaction of the reaction product with 2 mol of 2-hydroxyethyl acrylate.

UA-3: urethane acrylate obtained by reaction of 1 mol of polypropylene glycol (molecular weight: 1000) with 2 mol of tolylene diisocyanate and then reaction of the reaction product with 2 mol of 2-hydroxyethyl acrylate.

EPA-1: epoxy acrylate obtained by reaction of 1 mol equivalent of an epoxy group of bisphenol A type epoxy resin (epoxy equivalent: 185 g/equivalent) with 1 mol of acrylic acid until the acid value becomes 0.5 mg-KOH/g.

EPA-2: epoxy acrylate obtained by addition of 1,6-hexanediol diacrylate in a ratio of 30% relative to the total amount and then reaction of 1 mol equivalent of an epoxy group of bisphenol A type epoxy resin (epoxy equivalent: 475 g/equivalent) with 1 mol of acrylic acid until the acid value becomes 0.5 mg-KOH/g.

IRGACURE-184: 1-hydroxycyclohexylphenylketone, a photopolymerization initiator manufactured by CIBA Speciality Chemicals.

IRGACURE-2959:

1-[4-(2-hydroxyethoxy)-phenyl]-2-hydroxy-2-methyl-1-propan-1-one, a photopolymerization initiator manufactured by CIBA Speciality Chemicals. IRGACURE-907: 2-methyl-1-[4-(methylthio)phenyl]-2-morpholinopropan-1-one, a photopolymerization initiator manufactured by CIBA Speciality Chemicals. IRGACURE-127: 2-hydroxy-1-{4-[4-(2-hydroxy-2-methyl-propionyl)-benzyl]-phenyl}2-methyl-propan-1-one, a photopolymerization initiator manufactured by CIBA Speciality Chemicals. Esacure ONE-S: ofigo{2-hydroxy-2-methyl-1-[4-(1-methylvinyl)phenyl]propanone}, a photopolymerization initiator manufactured by Lamberti.

Lucirin TPO: 2,4,6-trimethylbenzoyl diphenyl phosphine oxide, a photopolymerization initiator manufactured by BASF.

IRGACURE-819: bis(2,4,6-trimethylbenzoyl)-phenyl phosphine oxide, a photopolymerization initiator manufactured by CIBA Speciality Chemicals.

AM-1: tricyclodecane dimethylol diacrylate, manufactured by Nippon Kayaku Co., Ltd.
AM-2: tetrahydrofurfuryl acrylate, manufactured by Osaka Organic Chemical Industry Ltd.
AM-3: 2-ethoxyethoxyethyl acrylate.
AM-4: isobornyl acrylate.
AM-5: 4 mol-ethylene oxide modified bisphenol A type diacrylate.
AM-6: tripropylene glycol diacrylate.
AM-7: 4-acryloylmorpholine.
AM-8: phenoxy diethyleneglycol (meth)acrylate.
AM-9: 2-hydroxy-3-phenoxypropyl (meth)acrylate.
AM-10: methoxy tripropylene glycol mono(meth)acrylate.
AM-11: methacrylic acid 1,2,2,6,6-pentamethyl-4-piperidyl.

IRGANOX 1520L: ultraviolet absorber, manufactured by CIBA Speciality Chemicals. BYK-UV-3570: reactive silicone, acryl group-containing polyester-modified polydimethylsiloxane, manufactured by BYK Japan KK.

As clear from Tables 1, 2 and 3, the optical disc of the present invention enables to provide a next generation high density optical disc less warping after curing and excellent in transparency and durability. In addition, superiority of the ultraviolet-curable resin composition of the present invention in airing test makes it very easy to control the film thickness by recycle use in production by a spin coating method and the ultraviolet-curable resin of the present invention enables durability to recycle use for efficient production. Therefore, the present invention is extremely useful as a protective coating agent for light transmitting layers forming a light transmitting layer of optical discs where recording and/or reproducing are performed using a blue laser.

In addition, as clear from Table 3, the optical discs obtained in Examples 11 to 13 are dramatically improved in resistance to fingerprint staining which is required for cover layers and it is not necessary to form a hard coat layer on the surface of the cured product layer of the present resin composition, and therefore it is possible to improve production efficiency of optical discs. The present resin composition is extremely useful in terms of production process.

Industrial Applicability

The present invention provides a protective coating agent applied for a light transmitting layer of next generation high density optical discs using a blue laser, which enables efficient production of next generation high density optical discs which have less warping after curing and are excellent in transparency and durability, as well as can be applied for materials of optical discs using a red laser.

**Claims**

1. An optical disc having a cured product layer of an ultraviolet-curable resin composition containing (A) dicyclopentenyloxyethyl acrylate, (B) urethane (meth)acrylate and/or (C) epoxy (meth)acrylate, and (D) a photopolymerization initiator.

2. The optical disc according to Claim 1, wherein the cured product layer is a cured product layer of an ultraviolet-curable resin composition containing 5 to 60% by weight of dicyclopentenyloxyethyl acrylate (A), 5 to 55% by weight of urethane (meth)acrylate (B) and/or 5 to 55% by weight of epoxy (meth)acrylate (C), and 2 to 15% by weight of a photopolymerization initiator (D).

3. The optical disc according to Claim 1, wherein the cured product layer is a cured layer of an ultraviolet-curable resin composition containing 5 to 60% by weight of dicyclopentenyloxyethyl acrylate (A), 10 to 45% by weight of urethane (meth)acrylate (B) and/or 10 to 45% by weight of epoxy (meth)acrylate (C), and 2 to 15% by weight of a photopolymerization initiator (D).

4. The optical disc according to Claim 1, wherein the epoxy (meth)acrylate (C) is bisphenol A type epoxy diacrylate.

5. The optical disc according to Claim 1, wherein the photopolymerization initiator (D) is one or more kinds selected from the group consisting of 1-hydroxycyclohexylphenylketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one and oligo{2-hydroxy-2-methyl-1-[4-(1-methylvinyl)phenyl]propanone}.

6. The optical disc according to Claim 1, wherein the urethane (meth)acrylate (B) is a reaction product of, at least one kind polyol selected from the group consisting of polyester polyol, polyether polyol and caprolactone alcohol; diisocyanate; and 2-hydroxyethyl acrylate.

7. The optical disc according to Claim 1, wherein the epoxy (meth)acrylate (C) is bisphenol A type epoxy diacrylate, and the urethane (meth)acrylate (B) is a reaction product of, at least one kind polyol selected from the group consisting of polyester polyol, polyether polyol and caprolactone alcohol; diisocyanate; and 2-hydroxyethyl acrylate.

8. The optical disc according to any one of Claims 1 to 7, wherein the cured product layer is a protective coat layer for a light transmitting layer of an optical disc where recording and/or reproducing are performed by a blue laser.

9. The optical disc according to any one of Claims 1 to 7, **characterized in that** the ultraviolet-curable resin composition further contains a dimethyl silicone compound ingredient (F) having a reactive unsaturated group and the optical disc does not have a hard coat layer on the surface of the cured product layer of said resin composition.

10. The optical disc according to any one of Claims 1 to 7, wherein the cured product layer is a protective coat layer for a light transmitting layer of an optical disc provided with a (semitransparent) reflective film consisting of a silver or silver alloy.

11. An ultraviolet-curable resin composition for optical discs, **characterized by** containing (A) dicyclopentenyloxyethyl acrylate, (B) urethane (meth)acrylate and/or (C) epoxy (meth)acrylate, and (D) a photopolymerization initiator.

12. The ultraviolet-curable resin composition for optical discs according to Claim 11, wherein 5 to 60% by weight of dicyclopentenyloxyethyl acrylate (A), 5 to 55% by weight of urethane (meth)acrylate (B) and/or 5 to 55% by weight of epoxy (meth)acrylate (C), and 2 to 15% by weight of a photopolymerization initiator (D) are contained in terms of the ratio in the resin composition.

13. The ultraviolet-curable resin composition for optical discs according to Claim 11, wherein 5 to 60% by weight of dicyclopentenyloxyethyl acrylate (A), 10 to 45% by weight of urethane (meth)acrylate (B) and/or 10 to 45% by weight of epoxy (meth)acrylate (C), and 2 to 15% by weight of a photopolymerization initiator (D) are contained in terms of the ratio in the resin composition.

14. The ultraviolet-curable resin composition for optical discs according to Claim 11, wherein the epoxy (meth)acrylate (C) is bisphenol A type epoxy diacrylate.

15. The ultraviolet-curable resin composition for optical discs according to Claim 11, wherein the photopolymerization initiator (D) is one or more kinds selected from the group consisting of 1-hydroxycyclohexylphenylketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one and oliga{2-hydroxy-2-methyl-1-[4-(1-methylvinyl)phenyl]propanone}.

16. The ultraviolet-curable resin composition for optical discs according to Claim 11, wherein the urethane (meth)acrylate (B) is a reaction product of (i) at least one kind polyol selected from the group consisting of polyester polyol, polyether polyol and caprolactone alcohol, (ii) diisocyanate and (iii)2-hydroxyethyl acrylate.

17. The ultraviolet-curable resin composition for optical discs according to Claim 11, wherein the ultraviolet-curable resin composition further contains a dimethyl silicone compound ingredient (F) having a reactive unsaturated group.

18. The ultraviolet-curable resin composition for optical discs according to Claim 11, wherein the epoxy (meth)acrylate (C) is bisphenol A type epoxy diacrylate, and the urethane (meth)acrylate (B) is a reaction product of, at least one kind polyol selected from the group consisting of polyester polyol, polyether polyol and caprolactone alcohol; diisocyanate; and 2-hydroxyethyl acrylate.

19. The ultraviolet-curable resin composition for optical discs according to Claim 11, wherein 5 to 60% by weight of dicyclopentenyloxyethyl acrylate (A), 0 to 60% by weight of urethane (meth)acrylate (B) and/or 0 to 70% by weight of epoxy (meth)acrylate (C) where the total amount of the urethane (meth)acrylate (B) and the epoxy (meth)acrylate (C) is 46 to 70%, and 2 to 15% by weight of photopolymerization initiator (D) are contained in terms of the ratio relative to the whole resin composition.

20. The ultraviolet-curable resin composition for optical discs according to Claim 11, wherein the total content of dicyclopentenyloxyethyl acrylate (A) and acrylate monomer (E) which is not included in (A) to (C) and (F) is 30 to 60% by weight and the content of the ingredient (E) is 0 to 30% by weight; the content of a photopolymerization initiator (D) is 2 to 15% by weight; the content of the dimethyl silicone compound ingredient (F) having a reactive unsaturated group is 0 to 5% by weight; either one kind of urethane (meth)acrylate (B) or epoxy (meth)acrylate (C) or the both is 20 to 68% by weight; relative to the whole resin composition.

21. The ultraviolet-curable resin composition for optical discs according to any one of Claims 11 to 16, wherein the viscosity of the ultraviolet-curable resin composition measured at 25°C by an E type viscometer is 400 to 6,000 mPa·S.

22. The ultraviolet-curable resin composition for optical discs according to any one of Claims 11 to 16, wherein the viscosity of the ultraviolet-curable resin composition measured at 25°C by an E type viscometer is 1,200 to 3,000 mPa·S.

**23.** A cured product obtained by curing the ultraviolet-curable resin composition for optical discs according to any one of Claims 11 to 16.

| INTERNATIONAL SEARCH REPORT | International application No. |
|---|---|
| | PCT/JP2007/061356 |

A. CLASSIFICATION OF SUBJECT MATTER
*G11B7/254*(2006.01)i, *C08F290/06*(2006.01)i, *G11B7/24*(2006.01)i, *G11B7/257* (2006.01)i

According to International Patent Classification (IPC) or to both national classification and IPC

B. FIELDS SEARCHED

Minimum documentation searched (classification system followed by classification symbols)
G11B7/254, C08F290/06, G11B7/24, G11B7/257

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-52270 A  (Sony Chemicals Corp.), 23 February, 2006 (23.02.06), Claims 3, 10 & WO 2006-16493 A1 | 1-23 |
| A | JP 8-333304 A  (Idemitsu Petrochemical Co., Ltd.), 17 December, 1996 (17.12.96), Par. No. [0008] (Family: none) | 1-23 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 August, 2007 (30.08.07) | 11 September, 2007 (11.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11273147 B
- JP 2002230831 A

- JP 2005171154 A